# FASCICULE DE BREVET EUROPEEN

(11) **EP 1 672 830 B1**
(45) Date de publication et mention de la délivrance du brevet: **30.06.2010**
(21) Numéro de dépôt: 05112073.1
(22) Date de dépôt: 13.12.2005
(51) Int. Cl.: H04L 9/06

(54) **Masquage de mots binaires par un circuit intégré**
Binärwortmaskierung mit Hilfe einer integrierten Schaltung
Masking of binary words by an integrated circuit

(30) Priorité: 14.12.2004 FR 0452968
(43) Date de publication de la demande: 21.06.2006
(73) Titulaire: ST MICROELECTRONICS S.A., 92120 Montrouge (FR)
(72) Inventeur: Liardet, Pierre-Yvan, 13790 Peynier (FR); Teglia, Yannick, 13011 Marseille (FR)
(74) Mandataire: de Beaumont, Michel

(56) Documents cités:
- US-B1- 6 320 964
- BRUCE SCHNEIER: "Applied Cryptography Second Edition" 1996, JOHN WILEY & SONS , USA , XP002333190 * page 237 *
- MENEZES, VANSTONE, OORSCHOT: "Handbook of applied Cryptography" 1996, CRC PRESS LLC , USA , XP002333191 * page 10 *

## Description

### Domaine de l'invention

La présente invention concerne, de façon générale, les manipulations de nombres par des circuits intégrés et, plus particulièrement, le masquage de nombres binaires manipulés par un processeur afin de rendre ces nombres indétectables.

La présente invention s'applique plus particulièrement lorsque des données sont manipulées par un circuit intégré et mettent en oeuvre une ou plusieurs quantités secrètes que l'on souhaite protéger contre d'éventuels piratages. De tels piratages sont couramment désignés par DPA (Differential Power Analysis) ou SPA (Simple Power Analysis). Les attaques DPA analysent la consommation d'un circuit intégré sur la base d'hypothèses effectuées sur les quantités secrètes manipulées, de façon à découvrir celles-ci.

D'autres attaques connues sous la désignation DFA (Differential Fault Analysis) consistent à exploiter de manière cryptographique une injection de fautes dans le circuit de façon à découvrir le secret manipulé.

Les protections contre de telles tentatives de piratage utilisent très souvent des permutations bijectives pour masquer les quantités à protéger.

Un premier exemple d'application de la présente invention concerne le stockage temporaire d'une clé ou quantité secrète dans un registre pendant que cette clé a besoin d'être manipulée par un algorithme de cryptographie ou analogue.

Un autre exemple d'application de l'invention concerne le stockage temporaire de données dans une mémoire externe à un processeur traitant ces données. Dans une telle application, il est souvent souhaitable que les données ne soient pas stockées en clair dans la mémoire externe temporaire accessible par un éventuel pirate.

Un autre exemple d'application de la présente invention concerne le masquage des adresses dans lesquelles sont stockées des données sensibles. Dans cet exemple, ce n'est pas la donnée elle-même mais son adresse (considérée alors comme le mot binaire à masquer) qui subit une permutation bijective pour rendre plus difficile la découverte des données.

Un autre exemple d'application de l'invention concerne le masquage de l'ordre de lecture d'un code programme. Dans cet exemple, les adresses successives d'appel aux fonctions du programme sont masquées de façon à ce que le code ne soit pas exécutable sans connaître les éléments de la permutation bijective ayant permis son stockage. Dans un tel exemple, le stockage des données masquées est alors généralement en mémoire non volatile.

Plus généralement, l'invention s'applique dès que des données ou quantités binaires ont besoin d'être masquées pour protéger une quantité secrète directement ou indirectement.

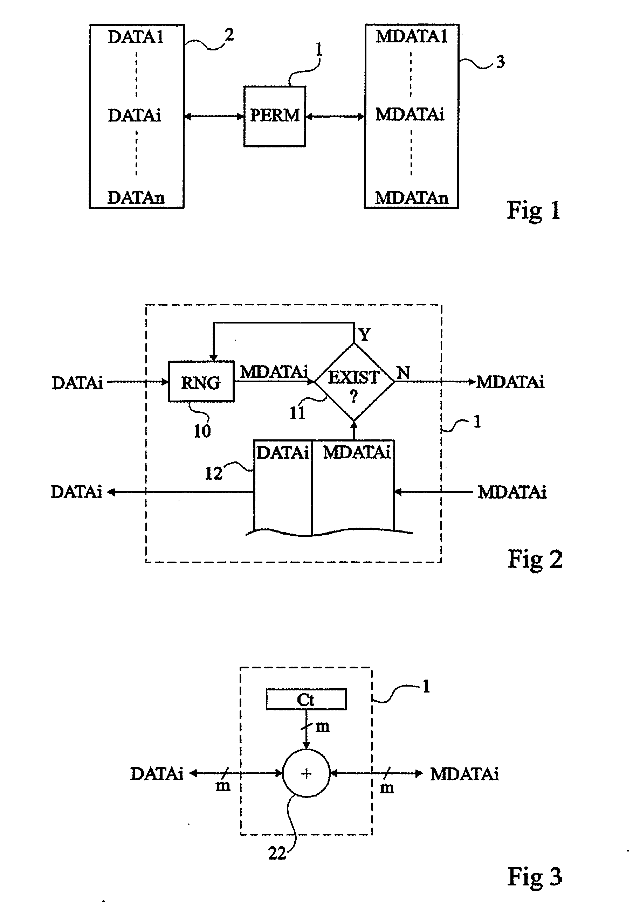

La figure 1 illustre, de façon très schématique et sous forme de blocs, un système de permutation bijective auquel s'applique la présente invention.

Le principe est, au moyen d'une bijection (bloc 1, PERM) généralement aléatoire, de transformer des mots de données DATAi (i compris entre 1 et n) d'un premier ensemble 2 en des mots protégés ou masqués MDATAi d'un deuxième ensemble 3. Pour que la permutation soit exploitable, elle doit réaliser une transformation bijective, c'est-à-dire qu'à chaque donnée DATAi correspond une et une seule donnée masquée MDATAi et, de préférence, que l'application de la même opération de transformation (opération involutive) permette de retrouver, depuis la donnée MDATAi, la donnée DATAi. Si l'opération n'est pas involutive, on utilise une opération inverse pour retrouver la donnée d'origine.

Dans un système auquel s'applique la présente invention, la transformation est effectuée par un ou plusieurs circuits de traitement numérique, par exemple de type microprocesseur ou circuits dédiés en logique câblée.

### Exposé de l'art antérieur

La figure 2 illustre, de façon très schématique et sous forme de blocs, un premier exemple connu de réalisation d'une transformation bijective 1. Selon cet exemple, à chaque fois qu'une donnée DATAi doit être transformée, on tire un nombre aléatoire (bloc 10, RNG) dont le résultat fournit directement ou indirectement la donnée masquée MDATAi. Pour éviter d'éventuelles collisions (affectation d'une même donnée masquée à deux données initiales distinctes), on vérifie (bloc 11, EXIST ?) à partir d'une table de correspondance 12 si la donnée MDATAi à déjà été affectée à une donnée à masquer. Dans la négative (N), la donnée courante MDATAi est affectée à la donnée à masquer. Dans l'affirmative (Y), c'est-à-dire si le tirage a déjà été utilisé, un nouveau tirage est effectué par le bloc 10.

La transformation inverse consiste à partir d'une donnée MDATAi à extraire la donnée DATAi correspondante de la table 12 constituant ainsi une table de correspondance réinitialisée à chaque fois qu'une nouvelle bijection est nécessaire.

Un inconvénient d'une telle solution est que la génération de la table est gourmande en ressources de calcul pour éviter la réutilisation de valeurs qui ont déjà été affectées.

Un autre inconvénient est qu'elle requiert le stockage d'une table de correspondance en mémoire volatile.

La figure 3 illustre un deuxième exemple de solution connue par une représentation schématique du bloc 1 de permutation. Selon cet exemple, une constante Ct est tirée par un générateur aléatoire (non représenté) à chaque nouvelle bijection (à chaque réinitialisation du circuit par exemple). Cette constante Ct est combinée avec la donnée DATAi à masquer par une fonction OU-Exclusif 22 et le résultat fournit la donnée MDATAi. Une telle opération de combinaison OU-Exclusif (XOR) est involutive, la même donnée MDATAi combinée avec la même constante Ct redonnant la donnée initiale DATAi. La seule condition est que les données et la constante aient la même taille (par exemple, m bits).

La solution de la figure 3 présente l'avantage d'être simple à mettre en oeuvre. Elle a toutefois pour inconvénient notable de réduire considérablement le nombre de bijections possibles pour une taille m de mots binaires. En effet, pour un mot de m bits, le nombre de bijections est limité à 2^{m}, c'est-à-dire que le tirage aléatoire de la constante Ct ne permet de générer qu'une petite partie des transformations bijectives possibles pour le nombre de bits considéré. En théorie, le nombre de bijections possibles pour un mot de m bits est le factoriel de 2 à la puissance m (2^{m}!). Par exemple, pour des mots de huit bits, cela revient à environ 10⁶⁰⁰ bijections contre 256 dans le cas de la figure 3.

Un inconvénient est le risque (lié au nombre de bijections) d'exécutions dans lesquelles la même constante aléatoire Ct est tirée.

### Résumé de l'invention

La présente invention vise à pallier les inconvénients des solutions connues pour réaliser des transformations bijectives entre deux nombres binaires manipulés par un circuit intégré.

L'invention vise plus particulièrement à proposer une solution pour augmenter le nombre de transformations bijectives utilisables.

L'invention vise également à préserver l'équi-probabilité de la sélection aléatoire de la bijection utilisée.

L'invention vise également à proposer une solution qui soit simple à mettre en oeuvre et qui, notamment ne nécessite pas de recalculer et de stocker dynamiquement une table de correspondance entre les données manipulées, ou entre le tirage aléatoire et l'une des données.

L'invention vise également à proposer une solution dont l'exécution soit temporellement rapide afin de ne pas nuire à l'exécution des calculs par le circuit traitant ces données.

L'invention vise, en outre, dans une réalisation préférée, à proposer une opération de transformation involutive.

Pour atteindre tout ou partie de ces objets ainsi que d'autres, la présente invention prévoit un procédé de masquage d'un mot numérique par application d'une bijection aléatoire, consistant à appliquer au moins une première opération consistant à :
sélectionner un sous-ensemble non disjoint dudit mot dont la position et la taille dépendent d'une première quantité aléatoire ; et
attribuer à chaque bit du sous-ensemble l'état du bit de position symétrique par rapport au milieu du sous-ensemble de façon à obtenir une quantité numérique masquée.

Selon un mode de mise en oeuvre de la présente invention, ladite première quantité aléatoire est utilisée pour sélectionner une représentation de la première opération dans une table stockée en mémoire, chaque représentation dans la table étant unique par le sous-ensemble concerné du mot.

Selon un mode de mise en oeuvre de la présente invention, ladite table contient, pour un mot de m bits, 2^{m-1} représentations de la première opération.

Selon un mode de mise en oeuvre de la présente invention, une deuxième opération de combinaison bit à bit par une fonction OU-Exclusif avec une deuxième quantité aléatoire de même taille que le mot est appliquée avant ou après ladite première opération.

Selon un mode de mise en oeuvre de la présente invention, une troisième opération consistant en une permutation circulaire des bits, un nombre de fois conditionné par une troisième quantité aléatoire, est appliquée avant ou après la première ou deuxième opération.

Selon un mode de mise en oeuvre de la présente invention, ladite troisième quantité comporte, pour un mot de m bits, log₂(m) bits.

L'invention prévoit également un procédé de démasquage d'une donnée numérique masquée par la première opération, consistant à appliquer, à la donnée à démasquer, la même première opération conditionnée par la même première quantité aléatoire.

L'invention prévoit également un procédé de démasquage d'une donnée numérique masquée par les deux premières opérations, consistant à appliquer, dans un ordre inverse les mêmes opérations conditionnées par les mêmes quantités aléatoires.

L'invention prévoit également un procédé de démasquage d'une donnée numérique masquée par les trois opérations, consistant à appliquer, à la donnée à démasquer, une permutation circulaire inverse, un nombre de fois conditionné par la même troisième quantité aléatoire avant ou après d'appliquer, dans un ordre inverse les mêmes première et deuxième opérations conditionnées par les mêmes première et deuxième quantités aléatoires.

L'invention prévoit également un circuit de masquage d'un mot numérique par application d'une bijection aléatoire, comportant :
au moins un générateur d'au moins une quantité aléatoire ;
au moins un élément de mémorisation ; et
au moins une unité de calcul propre à mettre en oeuvre tout ou partie des opérations.

Selon un mode de réalisation de la présente invention, l'unité de calcul comporte une cellule en logique câblée dédiée au moins à la première opération.

Selon un mode de réalisation de la présente invention, la même cellule est utilisée pour le démasquage.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
les figures 1 à 3 qui ont été décrites précédemment sont destinées à exposer l'état de la technique et le problème posé ;
la figure 4 illustre, de façon très schématique et sous forme de blocs, un mode de mise en oeuvre du procédé de réalisation d'une transformation bijective aléatoire exploitant une opération involutive selon la présente invention ;
la figure 5 illustre, de façon très schématique et sous forme de blocs, un premier exemple d'application de la transformation de la présente invention ;
la figure 6 illustre, de façon très schématique et sous forme de blocs, un deuxième exemple d'application de la présente invention ; et
la figure 7 illustre, de façon très schématique et sous forme de blocs, un mode de mise en oeuvre d'une opération inverse à une opération du mode de mise en oeuvre de la figure 6.

Les mêmes éléments ont été désignés par les mêmes références aux différentes figures. Pour des raisons de clarté, seuls les éléments et étapes de procédé qui sont nécessaires à la compréhension de l'invention ont été représentés aux figures et seront décrits par la suite. En particulier, l'exploitation faite des mots binaires manipulés par le procédé de l'invention n'a pas été détaillée, celle-ci étant compatible avec n'importe quel traitement algorithmique classique dans lequel on souhaite protéger au moins certaines données qu'il manipule.

### Description détaillée

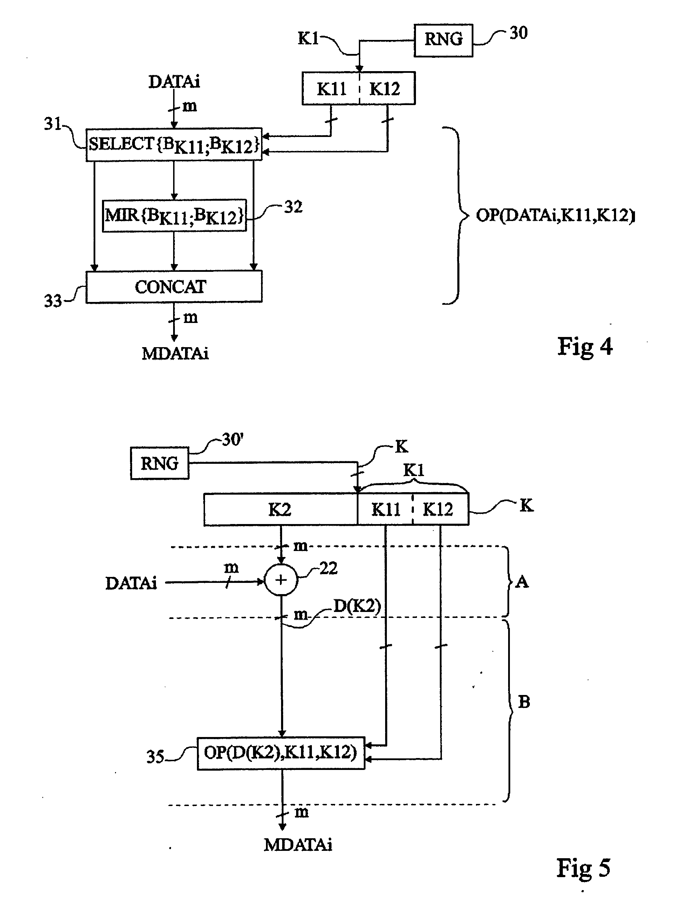

La figure 4 illustre, de façon très schématique et sous forme de blocs, un mode de mise en oeuvre d'une opération OP de transformation bijective et involutive selon un mode de mise en oeuvre de l'invention. Cette opération est destinée à être appliquée seule ou combinée à d'autres opérations qui seront décrites par la suite, selon le nombre de bijections possibles souhaitées et selon le caractère involutif ou non voulu pour la transformation globale.

L'opération OP propre à l'invention consiste à attribuer, à chaque bit d'un sous-ensemble {Bₖ₁₁ ; B_{K12}} du mot binaire DATAi à masquer, l'état du bit de position symétrique par rapport au milieu du sous-ensemble. Le sous-ensemble considère les bits successifs et est défini, en position et en taille dans le mot DATAi, par une quantité aléatoire. La figure 4 est un organigramme simplifié des étapes successives mises en oeuvre pour masquer un mot binaire DATAi en un mot binaire MDATAi, tous deux sur m bits, au moyen de cette opération.

L'opération OP (DATAi, K11, K12) fait intervenir une représentation de la symétrie définie, par exemple, par les quantités K11 et K12 qui désignent les positions respectives (compris entre 1 et m) des extrémités du sous ensemble {B_{K11} ; B_{K12}}. En variante, les quantités K11 et K12 désignent la position du premier bit et la longueur du sous-ensemble.

La représentation de l'opération provient, par exemple, d'une sélection dans une table à partir d'une quantité aléatoire K1, la représentation sélectionnée contenant les paramètres du sous-ensemble. Ainsi, chaque représentation dans la table est unique par le sous-ensemble concerné du mot de donnée. Cette table contient 2^{m-1} représentations de l'opération et est mémorisée une fois pour toute (par exemple, en mémoire non volatile à la fabrication du circuit). Elle n'a en effet pas besoin d'être générée à chaque fois.

La quantité K1 est, par exemple, tirée par un générateur 30 (RNG) à chaque besoin d'une nouvelle bijection, par exemple, à chaque mise sous tension du circuit manipulant les données, à chaque nouvelle exécution d'un algorithme de cryptographie (par exemple, de type DES ou AES), etc. En variante, la quantité K1 définit deux paramètres K11 et K12 d'une instruction logicielle.

Une première étape (bloc 31, SELECT{B_{K11} ; B_{K12}}) de l'opération représentée en figure 4 consiste à sélectionner un sous-ensemble de bits dans le mot DATAi.

Une deuxième étape (bloc 32, MIR{B_{K11} ; B_{K12}}) Consiste à attribuer, à chaque bit du sous-ensemble {B_{K11} ; B_{K12}}, l'état du bit de position symétrique par rapport au milieu de ce sous-ensemble. Cela revient à effectuer une transformation de type miroir sur le sous-ensemble du mot DATAi.

Une troisième et dernière étape (bloc 33, CONCAT) consiste à compléter le sous-ensemble obtenu par les bits non affectés du mot initial DATAi. En pratique, cette étape correspond à écrire dans un registre (ou autre élément de mémorisation) contenant la donnée DATAi, les bits du sous-ensemble {B_{K11} ; B_{K12}} issus de la deuxième étape.

Un avantage de l'opération miroir de l'invention est qu'elle respecte le caractère bijectif de la transformation, c'est-à-dire que, pour une même donnée DATAi, deux tirages aléatoires différents de la quantité K1 donneront deux données masquées différentes.

Un autre avantage de l'opération de l'invention est qu'elle est involutive, c'est-à-dire que l'application de la même opération (avec les mêmes quantités K11 et K12) à la donnée masquée MDATAi permet de retrouver la donnée DATAi. Cela simplifie considérablement la réalisation de la fonction de démasquage, dans la mesure où les mêmes opérateurs matériels peuvent être utilisés pour le masquage et le démasquage.

Le nombre de bijections possibles avec l'opération décrite en relation avec la figure 4 est égal à 2^{m-1}, soit pour 8 bits, 2⁷.

L'opération de l'invention peut être exécutée par un microprocesseur ou par une cellule dédiée en logique câblée d'un circuit intégré. Dans ce dernier cas, la même cellule peut être utilisée pour le démasquage.

La figure 5 illustre un premier exemple d'application de l'opération miroir selon la présente invention.

Selon cet exemple, deux phases A et B sont exécutées successivement. Ces phases sont conditionnées par des quantités aléatoires respectivement K2 et K1 tirées, par exemple, par un générateur 30'.

Une première phase A de l'exemple de la figure 5 consiste à appliquer une fonction OU-Exclusif (bloc 22, +) à la donnée d'entrée DATAi avec une quantité K2. La quantité K2 est par conséquent un mot de m bits comme les données DATAi manipulées.

La donnée D(K2) issue de la combinaison 22 est soumise à une deuxième phase B correspondant à l'opération OP(D(K2), K11, K12). La donnée de sortie est sur m bits.

Un avantage de la présente invention est qu'elle accroît considérablement le nombre de bijections possibles tout en garantissant que les transformations successives combinées déterminent une et une seule bijection par combinaison.

Selon l'invention, le nombre de bijections possibles dans l'exemple de la figure 5 est égal à 2^{2m-1}, soit pour 8 bits, 2¹⁵ qui sont à comparer aux 2⁸ bijections possibles avec la méthode classique de la figure 3.

En prenant un exemple numérique, supposons un mot de données DATAi de 8 bits 01101101 (109) et une quantité K correspondant à 100111100101101 (K2 = 10011110, K11 = 010, K12 = 110). On voit donc que, pour transformer des mots de huit bits, cette mise en oeuvre de l'invention requiert une quantité aléatoire K de 15 bits.

L'application de la première phase A de combinaison OU-Exclusif de la donnée DATAi avec la quantité K2 (10011110) conduit au mot D(109) = 11110011, soit la valeur 243.

La phase B applique une symétrie au sous ensemble défini par les bornes K11 et K12 (ici 010, donc 2 et 110, donc 6). En supposant les positions respectives des bits dans le mot comptées de 0 à 7, cette transformation conduit à ne pas modifier ni les deux premiers bits 11 ni le dernier bit 1 du mot D(109) et à appliquer une symétrie à tous les autres bits 11001. On obtient alors le mot MDATAi dont les bits sont 11100111, soit une donnée masquée de valeur 231.

La récupération de la donnée MDATAi passe par l'exécution des mêmes phases B et A mais dans l'ordre inverse. On part de la donnée MDATAi correspondant à 11100111 que l'on soumet à une symétrie sur ses cinq bits de rangs 2 à 6 (10011) pour obtenir la valeur 11110011. Cette valeur est combinée avec la valeur K2 (10011110) pour donner le mot DATAi 01101101.

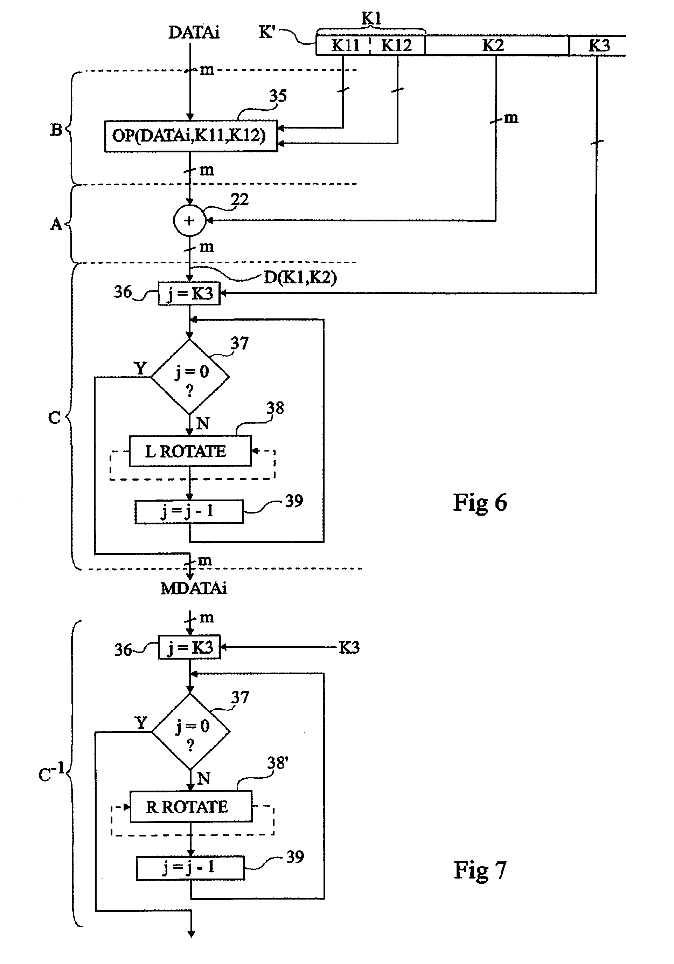

La figure 6 illustre, de façon très schématique et sous forme de blocs, un deuxième exemple d'application de l'opération miroir selon la présente invention.

Cet exemple se découpe en trois phases successives parmi lesquelles on retrouve les phases A et B exposées en relation avec la figure 5. Toutefois, l'ordre est inversé pour illustrer une variante.

Ainsi, deux première phases, conditionnées par des quantités aléatoires K1 et K2 sont appliquées à une donnée DATAi à masquer.

La donnée D(K1, K2) issue des phases B et A est soumise à une troisième phase C qui consiste à exécuter une permutation circulaire sur les bits du mot de m bits D (K1, K2). Cette permutation circulaire ou rotation s'effectue sur un nombre de bits correspondant à la valeur d'une troisième quantité aléatoire K3. En d'autres termes, la rotation est une rotation d'un bit à chaque fois exécutée de 0 à m-1 fois selon la quantité aléatoire K3. La quantité K3 est, par conséquent, un nombre sur log₂(m) bits, soit pour des mots de données de 8 bits, 3 bits.

Par exemple, un compteur j (bloc 36, j = K3) est initialisé avec la valeur K3. L'état du compteur est alors comparé à la valeur nulle (bloc 37, j=0 ?). Tant que le compteur j n'a pas atteint la valeur nulle (sortie N du test 37), le processus se poursuit par une rotation (bloc 38, LROTATE) d'un bit du mot D(K1, K2) et le compteur est décrémenté d'une unité (bloc 39, j = j-1) avant de revenir en entrée du test 37. Dès que le compteur atteint 0 (sortie Y du test 37), la donnée modifiée est fournie et constitue la donnée masquée MDATAi sur m bits.

Une transformation telle qu'illustrée par la figure 6 respecte le critère de bijection et permet un nombre de bijections possibles égal à 2^{2m-1}+log₂(m), soit pour 8 bits, 2¹⁸ qui sont à comparer aux 2⁸ bijections possibles avec la méthode classique de la figure 3.

La figure 7 illustre un mode de réalisation de la phase inverse C ⁻¹ de la phase de rotation C, permettant le démasquage de la donnée MDATAi.

Pour obtenir la donnée démasquée, il suffit d'appliquer une rotation dans le sens inverse (bloc 38', RROTATE) sur le même nombre K3 de bits. Pour une réalisation conforme à l'exemple de la figure 6, les mêmes étapes 36, 37, et 39 sont mises en oeuvre, seule l'étape de rotation proprement dite change par le sens de rotation.

La phase C ⁻¹ est à mettre en oeuvre dans l'ordre inverse par rapport à la phase C. En d'autres termes, si la phase C est la dernière du masquage, la phase C⁻¹ doit être la première du démasquage.

Dans l'exemple des figures 6 et 7, on a supposé un masquage par une rotation vers la gauche et un démasquage par une rotation vers la droite, l'inverse est bien sûr possible.

Un avantage de la présente invention est qu'elle accroît considérablement le nombre de bijections possibles tout en garantissant que les trois transformations successives combinées déterminent une et une seule bijection par combi naison.

Un autre avantage de la présente invention est que sa mise en oeuvre ne requiert ni le stockage en mémoire volatile d'une table recalculée à chaque fois, ni de transformation complexe. De simples manipulations de bits sont requises.

Les quantités aléatoires sont tirées à chaque besoin d'une nouvelle bijection. En d'autres termes, une quantité aléatoire K ou K' dont la taille représente la somme des tailles des quantités aléatoires individuelles K1 et K2, ou K1, K2 et K3 est tirée, par exemple, à chaque mise sous tension du circuit manipulant les données. Cette quantité aléatoire pouvant être assimilée à une clé temporaire est stockée dans un registre dont les bits respectifs peuvent être lus par sous-ensembles.

Selon une variante, plutôt que de tirer une seule quantité aléatoire K ou K', plusieurs quantités distinctes sont tirées aléatoirement et stockées dans un ou plusieurs registres.

Bien entendu, la présente invention est susceptible de diverses variantes et modifications qui apparaîtront à l'homme de l'art. En particulier, la réalisation pratique de l'invention est à la portée de l'homme du métier à partir des indications fonctionnelles données ci-dessus en utilisant des outils logiciels et de programmation classiques. Par exemple, un circuit selon un mode de réalisation de l'invention comprend au moins un générateur d'au moins une quantité aléatoire, au moins un élément de mémorisation pour stocker cette quantité aléatoire et au moins une unité de calcul. Si les représentations de la première opération sont stockées sous forme de table, le circuit comporte également une mémoire non volatile contenant cette table. En variante, tous les traitements sont effectués par un microcontrôleur.

De plus, l'adaptation des tailles respectives des quantités aléatoires tirées au nombre de bits des mots à masquer dépend de l'application et est à la portée de l'homme du métier, l'exemple sur huit bits constituant un exemple préféré.

En outre, plusieurs opérations miroir (35) sur des sous-ensembles différents peuvent être réalisées à la suite les unes des autres, imbriquées ou non avec d'autres opérations de combinaison OU-Exclusif et de permutation circulaire.

## Revendications

1. Procédé de masquage d'un mot numérique (DATAi) par application d'une bijection aléatoire, **caractérisé en ce qu'**il consiste à appliquer au moins une première opération (35) consistant à :
sélectionner (31) un sous-ensemble non disjoint dudit mot dont la position et la taille dépendent d'une première quantité aléatoire (K1) ; et
attribuer (32) à chaque bit du sous-ensemble, l'état du bit de position symétrique par rapport au milieu du sous-ensemble, de façon à obtenir une quantité numérique masquée (MDATAi).

2. Procédé selon la revendication 1, dans lequel ladite première quantité aléatoire (K1) est utilisée pour sélectionner une représentation de la première opération (35) dans une table stockée en mémoire, chaque représentation dans la table étant unique par le sous-ensemble concerné du mot.

3. Procédé selon la revendication 2, dans lequel ladite table contient, pour un mot de m bits, 2^{m-1} représentations de la première opération (35).

4. Procédé selon la revendication 1, dans lequel une deuxième opération (A) de combinaison bit à bit par une fonction OU-Exclusif avec une deuxième quantité aléatoire (K2) de même taille (m) que le mot est appliquée avant ou après ladite première opération (35).

5. Procédé selon la revendication 4, dans lequel une troisième opération (C) consistant en une permutation circulaire des bits, un nombre de fois conditionné par une troisième quantité aléatoire (K3), est appliquée avant ou après la première ou deuxième opération.

6. Procédé selon la revendication 5, dans lequel ladite troisième quantité (K3) comporte, pour un mot de m bits, log₂(m) bits.

7. Procédé de démasquage d'une donnée numérique (MDATAi) masquée par le procédé selon l'une quelconque des revendications 1 à 3, **caractérisé en ce qu'**il consiste à appliquer, à la donnée à démasquer, la même première opération (35) conditionnée par la même première quantité aléatoire (K1).

8. Procédé de démasquage d'une donnée numérique (MDATAi) masquée par le procédé selon la revendication 4, **caractérisé en ce qu'**il consiste à appliquer dans un ordre inverse les même opérations (A, B) conditionnées par les mêmes quantités aléatoires (K1, K2).

9. Procédé de démasquage d'une donnée numérique (MDATAi) masquée par le procédé selon la revendication 5 ou 6, **caractérisé en ce qu'**il consiste à appliquer, à la donnée à démasquer, une permutation circulaire inverse (38'), un nombre de fois conditionné par la même troisième quantité aléatoire (K3) avant ou après d'appliquer, dans un ordre inverse les mêmes première et deuxième opérations (A, B) conditionnées par les mêmes première et deuxième quantités aléatoires (K1, K2).

10. Circuit de masquage d'un mot numérique (DATAi) par application d'une bijection aléatoire, **caractérisé en ce qu'**il comporte :
au moins un générateur (30, 30') d'au moins une quantité aléatoire ;
au moins un élément de mémorisation ; et
au moins une unité de calcul propre à mettre en oeuvre les opérations du procédé selon l'une quelconque des revendications 1 à 8.

11. Circuit selon la revendication 10, dans lequel l'unité de calcul comporte une cellule en logique câblée dédiée au moins à la première opération (35).

12. Circuit selon la revendication 11, dans lequel la même cellule est utilisée pour le démasquage.

## Claims

1. A method for masking a digital word (DATAi) by application of a random bijection, **characterized in that** it consists of applying at least one first operation (35) consisting of:
selecting (31) a non-disjoint subset of said word having its position and size depending on a first random quantity (K1) ; and
assigning (32) to each bit of the subset the state of the bit having a symmetrical position with respect to the middle of the subset, to obtain a masked digital quantity (MDATAi).

2. The method of claim 1, wherein said first random quantity (K1) is used to select a representation of the first operation (35) in a stored table, each representation in the table being unique by the concerned subset of the word.

3. The method of claim 2, wherein said table contains, for an m-bit word, 2^{m-1} representations of the first operation (35).

4. The method of claim 1, wherein a second operation (A) of bit-to-bit combination by an XOR function with a second random quantity (K2) of same size (m) as the word is applied before or after said first operation (35).

5. The method of claim 4, wherein a third operation (C) consisting of a circular permutation of the bits, a number of times conditioned by a third random quantity (K3), is applied before or after the first or second operation.

6. The method of claim 5, wherein said third quantity (K3) comprises, for an m-bit word, log₂(m) bits.

7. A method for unmasking digital data (MDATAi) masked by the method of any of claims 1 to 3, consisting of applying, to the data to be unmasked, the same first operation (35) conditioned by the same first random quantity (K1).

8. A method for unmasking digital data (MDATAi) masked by the method of claim 4, consisting of applying, in an inverse order, the same operations (A, B) conditioned by the same random quantities (K1, K2).

9. A method for unmasking digital data (MDATAi) masked by the method of claim 5 or 6, **characterized in that** it consists of applying, to the data to be unmasked, an inverse circular permutation (38'), a number of times conditioned by the same third random quantity (K3) before or after applying, in an inverse order, the same first and second operations (A, B) conditioned by the same first and second random quantities (K1, K2).

10. A circuit for masking a digital word (DATAi) by application of a random bijection, comprising:
at least one generator (30, 30') of at least one random quantity;
at least one storage element; and
at least one calculation unit capable of implementing the operations of any of claims 1 to 8.

11. The circuit of claim 10, wherein the calculation unit comprises a cell in wired logic dedicated at least to the first operation (35).

12. The circuit of claim 11, wherein the same cell is used for the unmasking.

## Patentansprüche

1. Verfahren zum Maskieren eines digitalen Wortes (DATAi) durch Anwenden einer zufälligen Bijektion, **dadurch gekennzeichnet, dass** es aus dem Anwenden wenigstens einer ersten Operation (35) besteht, die folgende Schritte aufweist:
Auswählen (31) einer nicht-disjunkten Teilmenge dieses Wortes, wobei dessen Position und Ausmaß von einer ersten zufälligen Größe (K1) abhängt; und
Zuordnen (32) zu jedem Bit der Teilmenge, den Zustand des Bits, das eine symmetrische Position hinsichtlich der Mitte der Teilmenge aufweist, um eine maskierte digitale Größe (MDATAi) zu erhalten.

2. Verfahren nach Anspruch 1, wobei die erste zufällige Größe (K1) zum Auswählen einer Darstellung der ersten Operation (35) in einer gespeicherten Tabelle verwendet wird, wobei jede Darstellung in der Tabelle hinsichtlich der betroffenenTeilmenge des Wortes eindeutig ist.

3. Verfahren nach Anspruch 2, wobei die Tabelle für ein m-Bit Wort 2^{m-1} Darstellungen der ersten Operation (35) enthält.

4. Verfahren nach Anspruch 1, wobei eine zweite Operation (A) einer Bitzu-Bit Kombination durch eine XOR-Funktion mit einer zweiten zufälligen Größe (K2) desselben Ausmaßes (m) für das Wort, vor oder nach der ersten Operation (35) angewendet wird.

5. Verfahren nach Anspruch 4, wobei eine dritte Operation (C) aus einer zirkularen Permutation der Bits besteht, wobei eine Anzahl von Durchläufen durch eine dritte Größe (K3) bedingt ist, vor oder nach der ersten oder zweiten Operation angewendet wird.

6. Verfahren nach Anspruch 5, wobei die dritte Größe (K3) für ein m-Bit Wort log₂(m) Bits aufweist.

7. Verfahren zum Demaskieren von digitalen Daten (MDATAi), die nach dem Verfahren nach einem der Ansprüche 1 bis 3 maskiert wurden, das ferner das Anwenden derselben ersten Operation (35), die durch dieselbe erste zufällige Größe (K1) bedingt ist, auf die zu demaskierenden Daten aufweist.

8. Verfahren zum Demaskieren von digitalen Daten (MDATAi), die nach dem Verfahren nach Anspruch 4 maskiert wurden, das ferner das Anwenden derselben Operationen (A, B) in umgekehrter Reihenfolge aufweist, die durch dieselben zufälligen Größen (K1, K2) bedingt sind.

9. Verfahren zum Demaskieren von digitalen Daten (MDATAi), die nach dem Verfahren nach Anspruch 5 oder 6 maskiert wurden, **dadurch gekennzeichnet, dass** es das Anwenden einer inversen zirkularen Permutation (38') auf die zu demaskierenden Daten aufweist, wobei die Anzahl der Durchläufe durch dieselbe dritte zufällige Größe (K3) bedingt ist, vor oder nach dem Anwenden der ersten und zweiten Operationen (A, B) in umgekehrter Reihenfolge, die durch dieselben ersten und zweiten zufälligen Größen (K1, K2) bedingt sind.

10. Schaltkreis zum Maskieren eines digitalen Wortes (DATAi) durch Anwenden einer zufälligen Bijektion, der Folgendes aufweist:
wenigstens einen Generator (30, 30') von wenigstens einer zufälligen Größe;
wenigstens ein Speicherelement; und
wenigstens eine Berechnungseinheit, geeignet zum Ausführen der Operationen nach einem der Ansprüche 1 bis 8.

11. Schaltkreis nach Anspruch 10, wobei die Berechnungseinheit eine Zelle als verdrahtete logische Schaltung aufweist, die wenigstens der ersten Operation (35) zugeordnet ist.

12. Schaltkreis nach Anspruch 11, wobei dieselbe Zelle zum Demaskieren benutzt wird.
